(19) Europäisches Patentamt
European Patent Office
Office européen des brevets

(11) Veröffentlichungsnummer: **0 231 523**
**B1**

(12) # EUROPÄISCHE PATENTSCHRIFT

(45) Veröffentlichungstag der Patentschrift: **31.08.88**

(21) Anmeldenummer: **86118105.5**

(22) Anmeldetag: **29.12.86**

(51) Int. Cl.⁴: **B 29 C 33/64**, C 08 G 18/61, C 08 L 75/04, C 08 J 9/00, C 08 K 5/54

(54) **Verfahren zur Herstellung von Polyurethanformkörpern.**

(30) Priorität: **09.01.86 DE 3600402**

(43) Veröffentlichungstag der Anmeldung: **12.08.87 Patentblatt 87/33**

(45) Bekanntmachung des Hinweises auf die Patenterteilung: **31.08.88 Patentblatt 88/35**

(84) Benannte Vertragsstaaten: **BE DE ES FR GB IT NL**

(56) Entgegenhaltungen: **EP-A-0 103 367**

(73) Patentinhaber: **Th. Goldschmidt AG, Goldschmidtstrasse 100 Postfach 101461, D-4300 Essen 1 (DE)**

(72) Erfinder: **Kollmeier, Hans- Joachim, Dr., Barkhorströcken 27, D-4300 Essen (DE)**
Erfinder: **Lammerting, Helmut, Schweerstrasse 11a, D-5812 Herbede (DE)**
Erfinder: **Langenhagen, Rolf- Dieter, Kampstrasse 5, D-4321 Hattingen- Niederwenigern (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 231 523 B1

LIBER, STOCKHOLM 1988

**Beschreibung**

Die Erfindung betrifft ein Verfahren zur Herstellung von Polyurethanformkörpern mit gegebenenfalls zellförmigem Kern, insbesondere nach dem RIM-Verfahren, durch Umsetzung von mindestens einem Polyol mit einem organischen Di- oder Polyisocyanat in Gegenwart von Katalysatoren, Trennmitteln und gegebenenfalls üblichen Zusatzmitteln, wie Vernetzern, Treibmitteln, Stabilisatoren, Zellregulatoren, Pigmenten und Füllstoffen. Ein derartiges Verfahren ist aus z. B. der DE-A-2-543 638 bekannt.

Polyurethanformteile werden in großem Umfang als Karosserieteile, wie Schürzen, Spoiler, Kotflügel, in der Automobilindustrie verwendet. Aufgrund ihrer Zähigkeit und Abriebfestigkeit sind sie als Schuhsohlen, Absätze und für viele andere Zwecke geeignet.

Die Aushärtung der Polyurethane geschieht unter gleichzeitiger Formgebung in geschlossenen, geheizten Formen. Dabei hat insbesondere das Reaction-Injection-Molding-Verfahren, sogenanntes RIM-Verfahren, besondere Bedeutung erlangt.

Ein erhebliches Problem ergibt sich daraus, daß die geformten Polyurethanteile dazu neigen, mit der inneren Formwandung zu verkleben. Zwar sind dem mit der Herstellung von Formteilen aus reaktiven Nassen vertrauten Fachmann Trennmittel in großer Zahl bekannt. Derartige Trennmittel können auf die Innenwände der Formen aufgebracht oder als interne Trennmittel dem Reaktionsansatz zugegeben werden. Die internen Trennmittel können unterschiedlichen Substanzklassen angehören. Als interne Trennmittel werden Metallseifen, wie z. B. Zinkstearat, Ester höherer Fettsäuren, natürliche oder synthetische Öle, Wachse oder Silicone verwendet.

Dabei sind als interne Trennmittel insbesondere solche Produkte bevorzugt, die eine besondere Vorbereitung der Formen überflüssig machen, die Eigenschaften des ausreagierten, geformten Kunststoffes nicht beeinflussen und möglichst keine Änderung der Oberflächeneigenschaften der Formteile, wie etwa eine Beeinträchtigung der Lackierbarkeit, verursachen. Die internen Trennmittel sollen im Reaktionsansatz gut verteilbar sein, müssen sich aber, um trennend wirken zu können, an der Oberfläche des Formteiles anreichern.

Beispiele von internen Trennmitteln, die insbesondere bei der Herstellung von Polyurethanformteilen nach dem RIM-Verfahren eingesetzt werden sollen, sind siliciumorganische Blockmischpolymerisate, welche neben Siloxanblöcken Polyoxyalkylenblöcke aufweisen. Dabei spielt offenbar die Struktur der Verbindungen eine für das Trennverhalten wesentliche Rolle.

So ist z. B. der DE-OS-2 543 638 zu entnehmen, daß die Verbindungen der Formel

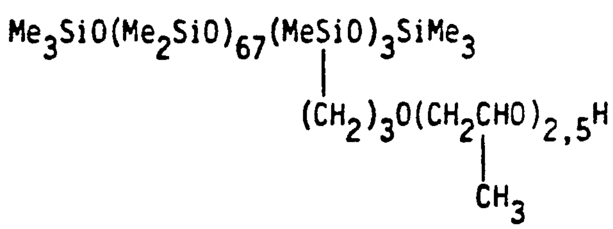

II

den Verbindungen mit der Formel

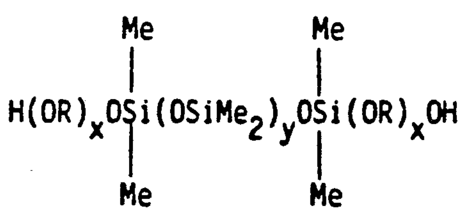

und/oder

III

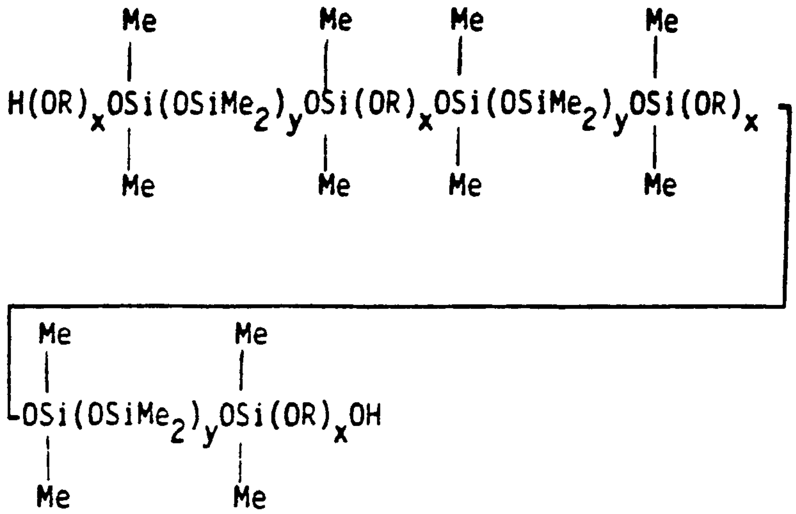

IV

unterlegen sein sollen, wobei in den Formeln III und IV die Indices x jeweils einen Mittelwert von 3 bis 45 haben, der Index y jeweils für einen Mittelwert von 8 bis 198 steht, Me Methyl bedeutet und der Rest $(-OR)_x$ für ein Polyoxyalkylenpolymer oder ein Polyoxyalkylencopolymer steht, wobei R aus Ethylenresten oder Butylenresten oder Gemischen aus Ethylen- oder Butylenresten mit Propylenresten zuammengesetzt ist, wobei die Menge aus Ethylen- oder Butylenresten im Verhältnis zur Menge der Propylenreste so gewählt ist, daß das Verhältnis aus den Kohlenstoffatomen zu den Sauerstoffatomen im gesamten Block (-OR-) 2,0 : 1 bis 2,9 : 1 ausmacht.

Dieser Offenlegungsschrift können auch Testmethoden zur Ermittlung und zum Vergleich der Trennfähigkeit verschiedener Trennmittel entnommen werden.

Spätere Arbeiten zeigen, daß gewisse funktionelle Gruppen die Trennfähigkeit verbessern können. Siloxane mit solchen funktionellen Gruppen sind aus der US-PS-4 076 695 bekannt. Sie enthalten als funktionelle Gruppe an Kohlenwasserstoffgruppen Carboxylgruppen, die ihrerseits mittels einer Si-C- oder SiOC-Bindung mit dem Siloxangerüst verbunden sind. Diese Trennmittel mit Carboxylgruppen bilden jedoch keine stabilen Mischungen mit den Polyolen, die Amin- und gegebenenfalls Sn-Katalysatoren enthalten. Durch den Zusatz dieser Verbindungen wird außerdem die Gelzeit des Polyurethansystems verlängert.

Eine Verwendung dieser Verbindungen als Bestandteil der Isocyanatkomponente ist aufgrund ihrer Reaktivität nicht möglich.

Diese Nachteile wurden zwar bei Verwendung der in der US-PS-4 472 341 beschriebenen siliciumorganischen Verbindungen als interne Trennmittel weitgehend überwunden. Diese Siloxane haben Einheiten 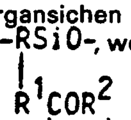, wobei R eine niedere Alkyl- oder Arylgruppe ist.

$R^1$ ist ein zweiwertiger Kohlenwasserstoffrest, der Sauerstoff- oder Schwefelatome enthalten kann.

$R^2$ ist eine niedrige Alkoxy-, eine Aroxygruppe oder die Gruppe $R^3O(CHR^4CH_2O-)_x$ wobei

$R^3$ ein Wasserstoffrest oder eine niedere Alkylgruppe,

$R^4$ ein Wasserstoff- oder Methylrest ist und

x einen Wert von 1 bis 50 hat.

Jedoch kann ihr Trennverhalten noch nicht völlig befriedigen. Gleiches gilt für Siloxane mit organisch gebundenen $CONR_2$-Gruppen, wobei R Wasserstoffreste bedeutet.

Ein weiterer Nachteil der bekannten internen Trennmittel besteht darin, daß sie bei der Herstellung von Polyurethanformkörpern mit zellförmigem Kern die Ausbildung oder Aufrechterhaltung der zellularen Struktur behindern und im Grenzfalle den gebildeten Schaum kollabieren lassen. Die Ausbildung der zellularen Struktur im Inneren des Formkörpers ist aber von Bedeutung für den Erhalt von Formkörpern einwandfreier Oberflächen, sowie im Hinblick auf die mechanischen Eigenschaften des erhaltenen Formkörpers.

Der Erfindung liegt deshalb die Aufgabe zugrunde, interne Trennmittel zur Herstellung von Polyurethanformteilen insbesondere nach dem RIM-Verfahren zu finden, welche den bekannten internen Trennmitteln bezüglich ihrer Trenneigenschaften überlegen sind, die eingangs gezeigten Anforderungen möglichst optimal erfüllen und darüber hinaus für den Fall der Herstellung von Polyurethanform körpern mit zellularem Kern die Ausbildung und oder Aufrechterhaltung der Zellstruktur nicht verhindern oder beeinträchtigen.

Überraschenderweise gelingt dies dadurch, daß man als Trennmittel Verbindungen der allgemeinen Formel

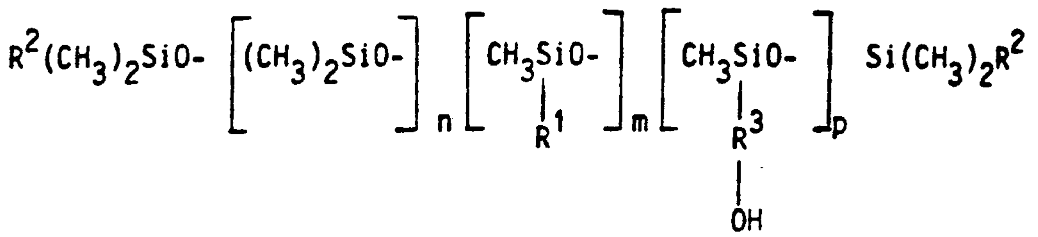

I

$R^1$ = Alkylgruppe mit 16 bis 40 Kohlenstoffatomen,

$R^2$ = $R^1$ oder Methylgruppe,

$R^3$ zweiwertige Kohlenwasserstoffgruppe, deren Kohlenstoffkette durch ein oder mehrere Sauerstoff atome unterbrochen sein kann,

n = 0 bis 50,

m = 2 bis 100, wobei m > n ist,

p = 0 bis 5

mit der Maßgabe, daß das Siloxan einen Schmelzpunkt ≥ 30°C aufweist, jedoch bei der Temperatur, die die Formwandung bei dem Verfahren annimmt, schmilzt,

in feinverteilter Form mit einer durchschnittlichen Teilchengröße von ≥ 5 bis 100 µm in Mengen von 0,5 bis 5 Gew.-%, bezogen auf Reaktionsansatz, verwendet.

Bei den beim erfindungsgemäßen Verfahren zu verwendenden Trennmitteln handelt es sich somit um Polymere, welche aus einem linearen Methylpolysiloxan bestehen und welche seitenständig (kammartig) und gegebenenfalls an den Kettenenden langkettige Kohlenwasserstoffgruppen aufweisen. Diese mit $R^1$ bezeichneten Gruppen bestimmen im wesentlichen den Schmelzpunkt der Polymeren. Mit steigender Kohlenstoffanzahl steigt der Schmelzpunkt der Verbindungen. Dabei ist es von wesentlicher Bedeutung, daß die erfindungsgemäß als Trennmittel verwendeten Verbindungen bis zu einer Temperatur von 30°C in festem Zustand vorliegen, jedoch bei der Temperatur, welche die Formwandungen bei der Durchführung des Verfahrens annehmen, schmelzen. Üblicherweise haben die Formwandungen bei dem Verfahren eine Temperatur von etwa 40 bis 80°C.

Die beim erfindungsgemäßen Verfahren zu verwendenden Siloxane können Methylsiloxyeinhelten aufweisen, an deren Si-Atome eine $R^3OH$-Gruppe gebunden ist. Hierdurch wird zusätzlich erreicht, daß die Trennmittel durch ihre Reaktivität mit dem Di- oder Polyisocyanat in die Polyurethanmatrix chemisch eingebaut werden. Dadurch ist eine spätere Migration zur Oberfläche ausgeschlossen.

Die Gruppe $R^1$ verleiht den Polymeren eine gewisse Unverträglichkeit im gebildeten Polyurethan, die mit steigender Kohlenstoffanzahl zunimmt und eine bevorzugte Anreicherung an den Grenzflächen bewirkt. Dabei hat sich gezeigt, daß die bei dem erfindungsgemäßen Verfahren zu verwendenden Trennmittel die Nukleierung, d. h. die Ausbildung und Aufrechterhaltung der Zellstruktur, nicht beeinflussen, so daß bei der Formgebung ein gleichmäßiger Innendruck aufrechterhalten und eine störungsfreie Formkörperoberfläche erhalten wird. Durch die Vermeidung der Störungen der zellularen Struktur im Forminneren werden Formkörper guter mechanischer Eigenschaften erhalten. Die spätere Bearbeitung, insbesondere die Lackierung, der erhaltenen Formkörper wird durch die erfindungsgemäß zugesetzten Trennmittel nicht beeinträchtigt. Die hergestellten Teile sind frei von Pinholes und Sinkmarkierung.

Innerhalb der beanspruchten Bedeutung der Gruppen $R^1$, $R^2$ und $R^3$ sowie der Indices n, m und p sind folgende Gruppen und Indices einzeln oder in Kombinationen bevorzugt:

$R^1$ ist vorzugsweise eine Alkylgruppe mit 20 bis 30 Kohlenstoffatomen. Dabei ist es möglich, daß innerhalb des polymeren Moleküls die Alkylgruppen eine wechselnde Kohlenstoffatomanzahl aufweisen. Dies ist z. B. dann der Fall, wenn die erfindungsgemäß zu verwendenden modifizierten Siloxane durch Umsetzung von Wasserstoffsiloxanen, d. h. Verbindungen, bei denen die Gruppe $R^1$ die Bedeutung eines Wasserstoffatoms hat, mit α-Olefinen erhalten werden und diese α-Olefine technisch als Gemische von Olefinen mit z. B. 20 bis 24 oder 24 bis 28 Kohlenstoffatomen eingesetzt werden.

$R^2$ ist vorzugsweise eine Methylgruppe.

$R^3$ ist vorzugsweise ein zweiwertiger Alkylenrest der Formel $-(CH_2)_p-$, wobei p eine Zahl von 3 bis 12 ist. $R^3$ kann aber auch ein Oxyalkylenblock der Formel $-(C_2H_4O-)_x(C_3H_6O)_y$ sein, wobei im Oxyalkylenblock x einen Wert von 0 bis 10 und y einen Wert von 0 bis 10 aufweisen können. Die Summe von x + y muß jedoch einen Mindestwert von 1 haben.

Der Index n, der die Anzahl der Dimethylsiloxyeinheiten angibt, hat vorzugsweise einen Wert von 0 bis 10.

Der Index m, durch den die Anzahl der mit langkettigen Alkylresten substituierten Methylsiloxyeinheiten bestimmt wird, hat vorzugsweise einen Wert von 5 bis 80, insbesondere einen Wert von 50 bis 80.

Die Anzahl der Methylsiloxyeinheiten mit über eine Kohlenstoffkette gebundenen Hydroxylgruppen, wobei die Kohlenstoffkette durch ein oder mehrere Sauerstoffatome unterbrochen sein kann, wird durch den Index p gegeben und beträgt vorzugsweise 1 oder 2.

Die nachfolgend gezeigten Verbindungen sind Beispiele der beim erfindungsgemäßen Verfahren zu verwendenden Trennmittel.

**Verbindung A:**

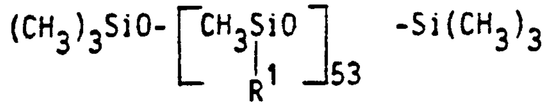

$R^1$ = Alkylrest mit 24 bis 28 C-Atomen

**Verbindung B:**

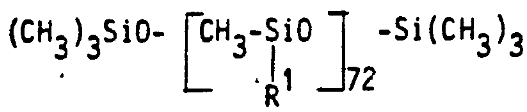

$R^1$ = Alkylrest mit 18 bis 24 C-Atomen.

**Verbindung C:**

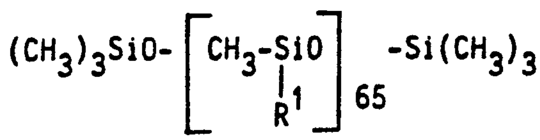

$R^1$ = Alkylrest mit 30 bis 36 C-Atomen.

**Verbindung D:**

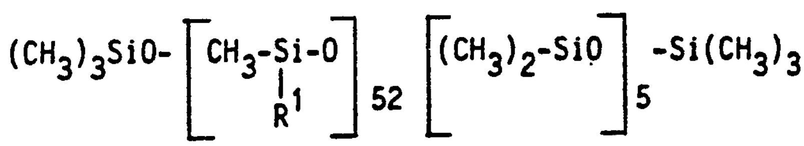

$R^1$ = Alkylrest mit 24 bis 28 C-Atomen.

**Verbindung E:**

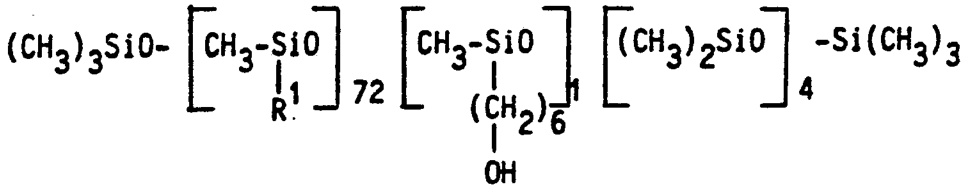

$R^1$ = Alkylrest mit 24 bis 28 C-Atomen.

**Verbindung F:**

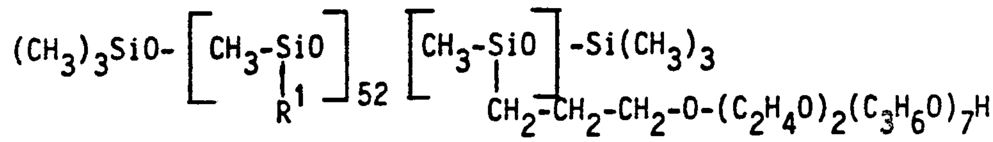

$R^1$ = Alkylrest mit 28 bis 32 C-Atomen.

Die Trennmittel werden beim erfindungsgemäßen Verfahren vorzugsweise in Form einer 10 bis 30 Gew.-%-igen Suspension, deren äußere Phase durch einen Teil des zur Verschäumung eingesetzten Polyols gebildet wird, verwendet. Zum Erhalt der Suspension können die modifizierten Siloxane zunächst im Polyol in einer verhältnismäßig groben Verteilung suspendiert werden. Die Polymeren werden dann im Polyol zerkleinert, indem man z. B. die zunächst erhaltene grobe Suspension mehrmals einen Halzenstuhl passieren läßt, bis die gewünschte Teilchengröße von $\geqslant$ 5 bis 100 µm erreicht ist. Besonders bevorzugt sind Suspensionen mit einer Teilchengröße der inneren Phase von 10 bis 20 µm. Dem Fachmann sind auch andere Vertellungsund Zerkleinerungsverfahren geläufig, z. B. die Zerstäubung der aufgeschmolzenen Verbindung im Gasstrom oder die Aufmahlung der Verbindungen, gegebenenfalls in Gegenwart von Polyol, in einer Kugelmühle. Es ist auch möglich, zunächst eine Emulsion der geschmolzenen modifizierten Siloxane unter Verwendung geeigneter Emulgatoren, z. B. von Ethylenoxid-Anlagerungsprodukten an Fettalkohole, herzustellen und die gewünschte feinteilige Dispersion durch Abkühlen der Emulsion unter den Schmelzpunkt der Siloxane zu erhalten.

Die erfindungsgemäß zu verwendenden Trennmittel werden in einer Menge von 0,5 bis 5 Gew.-%, vorzugsweise 1 bis 3 Gew.-%, bezogen auf Reaktionsansatz, eingesetzt.

Die Herstellung der erfindungsgemäß zu verwendenden Trennmittel erfolgt in an sich bekannter Weise z. B. dadurch, daß man an ein Polydiorganosiloxan der gewünschten Struktur, welches SiH-Gruppen aufweist, Olefine mit 16 bis 40 Kohlenstoffatomen sowie gegebenenfalls Oxyalkylenderivate eines ungesättigten Alkohols, z. B. des Allylalkohols, oder Olefine mit endständigen primären oder sekundären Hydroxylgruppen in Gegenwart eines Platinkatalysators anlagert. Derartige Verfahren sind in den US-Patentschriften 2 846 458, 3 234 252, 3 427 271 und 4 047 958 beschrieben.

In den folgenden Beispielen wird die Herstellung von Polyurethanformkörpern entsprechend der Erfindung gezeigt. Dabei werden die erfindungsgemäß zu verwendenden Trennmittel in ihrer Wirksamkeit mit Produkten des Standes der Technik verglichen. Dazu werden Trenn- und Luftbeladungsversuche in Labortestverfahren durchgeführt.

## 1. Trennversuche

Hierzu wird eine typische RIM-Formulierung mit einem Handmischgerät zubereitet. Man gibt das Gemisch in eine Testform und läßt es darin reagieren. Bei jeweils sonst identischen Rezepturen und Verfahrensbedingungen werden interne Trennmittel des Standes der Technik und beim erfindungsgemäßen Verfahren zu verwendende Trennmittel zugesetzt. Zusätzlich wird eine Testverschäumung ohne Trennmittelzusatz durchgeführt.

Versuchsdurchführung:

80 Gew.-Teile eines Polyetherpolyols mit der OH-Zahl 27, das durch Anlagerung von Propylenoxid an Trimethylolpropan und anschließende Anlagerung von Ethylenoxid hergestellt worden war, werden mit 28 Gew.-Teilen Ethylenglykol, 0,35 Gew.-Teilen Triethylendiamin, 0,02 Gew.-Teilen Dibutylzinndilaurat und 25 Gew.-Teilen einer Trennmitteldispersion, bestehend aus 5 Gew.-Teilen des erfindungsgemäßen Trennmittels und 20 Gew.-Teilen des oben verwendeten Polyetherpolyols, gemischt. Zur Herstellung der Dispersion wird die erfindungsgemäße Substanz zerkleinert und mit einer gezahnten Dispergierscheibe in dem oben verwendeten Polyetherpolyol gleichmäßig verteilt und das vorliegende Gemisch auf einer Dreiwalze so vermahlen, daß der Festkörper eine mittlere Teilchenfeinheit von 15 µ aufweist.

Als Isocyanat wird ein durch Umsetzung von 4,4-Diisocyanatodiphenylmethan mit Tripropylenglygokol erhaltenes Produkt, NCO-Gehalt 23 %, verwendet (Isocyanatkomponente). Jeweils 100 Gew.-Teile der Polyolkomponente werden mit 127 Gew.-Teilen der Isocyanatkomponente durch intensives Rühren mit einem Laborrührer mit 2 500 Umdrehungen in 7 Sek. vermischt. Das noch flüssig vorliegende Reaktionsgemisch wird in eine auf 70°C temperierte verschließbare Aluminiumform gegossen. Zum Verschließen der Form dient ein separater Deckel, der mit Schraubzwingen befestigt wird. Die Forminnenflächen und die Innenseite des zum Verschließen verwendeten Deckels werden vor dem Eingießen der Reaktionsmasse mit einem Trennmittel versehen. Dazu wird das Trennmittel mit einem Lappen sehr dünn aufgetragen und poliert. Nach einer Standzeit von 4 Min. wird der Deckel der Form entfernt und es werden die dabei notwendigen Zugkräfte mit einer Federwaage gemessen. Ohne Verwendung eines internen Trennmittels verklebt der Deckel mit dem

Reaktionsgut, so daß beim gewaltsamen Entfernen des Deckels die Oberfläche des Formlings beschädigt wird und Teile des Reaktionsgutes auf der Deckel Innenseite haften. Bei Verwendung interner Trennmittel wird die Entfernung des Formdeckels wesentlich erleichtert und eine Beschädigung der Oberfläche des Formlings vermieden. Die Ergebnisse von Vergleichsversuchen sind in der folgenden Tabelle zusammengestellt.

Als erfindungsgemäß zu verwendende siliciumorganische Polymerisate werden die in der Beschreibung genannten Verbindungen A - F verwendet.

Als Produkte des Standes der Technik werden verwendet:
Verbindung G, gemäß US-Patent 4 076 695
Verbindung H, gemäß DE-OS-2 543 638
Verbindung I, Zinkstearat

Zur Überprüfung der Vergleichsverbindungen G und H werden 100 Gew.-Teile des zuvor verwendeten Polyetherpolyols mit 28 Gew.-Teilen Ethylenglykol, 0,35 Gew.-Teilen Triethylendiamin, 0,02 Gew.-Teilen Dibutylzinndilaurat und 5 Gew.-Teilen der Vergleichsverbindung gemischt. Daraufhin wird wie bei der Überprüfung der erfindungsgemäßen Substanzen verfahren. Es werden ebenfalls die Trennkräfte gemessen.

Die Vergleichsverbindung I (Zinkstearat) wird analog den beim erfindungsgemäßen Verfahren zu verwendenden Verbindungen in dem verwendeten Polyetherpolyol dispergiert und eine 20 Gew.-%ige Dispersion zubereitet. Dabei wird ein mittlerer Teilchendurchmesser von 18 µ erreicht. Daraufhin wird wie bei der Überprüfung der erfindungsgemäßen Substanzen verfahren.

Die Zugabemenge der Trennmittel beträgt jeweils 1,65 Gew.-%, bezogen auf den Reaktionsansatz.

**Tabelle**

| Produkte | | Trennkraft [N/100 cm²] |
|---|---|---|
| Blindversuch ohne Zusatz | | 40 |
| Verbindung A | erfindungsgemäß | 14 |
| Verbindung B | erfindungsgemäß | 16 |
| Verbindung C | erfindungsgemäß | 15 |
| Verbindung D | erfindungsgemäß | 20 |
| Verbindung E | erfindungsgemäß | 20 |
| Verbindung F | erfindungsgemäß | 19 |
| Verbindung G | nicht erfindungsgemäß | 24 |
| Verbindung H | nicht erfindungsgemäß | 23 |
| Verbindung I | nicht erfindungsgemäß | 35 |

Die gemessenen Trennkräfte belegen die hohe Wirksamkeit der beim erfindungsgemäßen Verfahren zu verwendenden Trennmittel.

**2. Luftbeladungsversuche:**

In einem separaten Test wird das Luftbeladungsvermögen von Polyolkomponenten beim Zusatz der erfindungsgemäßen Substanzen gemessen und mit den Produkten vom Stand der Technik verglichen. Zur Versuchsdurchführung werden 88 Gew.-Teile des zuvor verwendeten Polyetherpolyols mit 28 Gew.-Teilen Ethylenglykol, 0,35 Gew.-Teilen Triethylendiamin, 0,02 Gew.-Tei len Dibutylzinndilaurat und jeweils 15 Gew.-Teile einer 20 Gew.-%-igen Dispersion der Verbindungen A - F zugesetzt. Dieses Gemisch wird 4 Min. lang bei 2 300 Umdrehungen intensiv gerührt, um dabei möglichst viel Luft einzuschlagen. Danach werden 70 g in einem Standzylinder abgewogen. Es wird unmittelbar nach dem Einfüllen der Substanz die Füllhöhe dieses Flüssigkeits-Luft-Gemisches gemessen.

Zur Überprüfung der Vergleichsverbindungen G und H werden 100 Gew.-Teile des verwendeten Polyetherpolyols mit 28 Gew.-Teilen Ethylenglykol, 0,35 Gew.-Teilen Triethylendiamin, 0,02 Gew.-Teilen Dibutylzinndilaurat und jeweils 3 Teile der genannten Substanzen zugemischt. Zur Messung der Luftbeladung wird analog der Überprüfung der erfindungsgemäßen Substanzen verfahren.

Zur Überprüfung der Vergleichssubstanz I wird eine 20 %-ige Dispersion in einem Polyetherpolyol wie zuvor beschrieben, verwendet. Es wird analog dem zuvor aufgeführten Beispiel zur Überprüfung der erfindungsgemäßen Substanzen verfahren.

In der nachstehenden Tabelle sind die Ergebnisse des Luftbeladungstests aufgeführt:

| Produkte | | Füllstand in ml |
|---|---|---|
| Blindversuch ohne Zusatz | | 77 |
| Verbindung A | erfindungsgemäß | 77,5 |
| Verbindung B | | 77,5 |
| Verbindung C | | 84 |
| Verbindung D | | 76,5 |
| Verbindung E | | 77,0 |
| Verbindung F | | 78,0 |
| Verbindung G | nicht erfindungsgemäß | 72,5 (keine Luftblase erkennbar) |
| Verbindung H | | 72 (keine Luftblase erkennbar) |
| Verbindung I | | 85 |

Die Ergebnisse zeigen, daß die beim erfindungsgemäßen Verfahren zu verwendenden Substanzen in der Lage sind, eine Luftbeladung zu ermöglichen. Die Vergleichsverbindungen G und H verhindern die Bildung eines stabilen Luft/Polyol-Gemisches. Zinkstearat (Vergleichsverbindung I) ermöglicht zwar eine Luftbeladung, weist jedoch, gemessen an den erfindungsgemäß zu verwendenden Substanzen, eine wesentlich geringere Trennwirkung auf.

Das erfindungsgemäße Verfahren ermöglicht daher gute Entformung bei Erhalt einer Schaumstruktur, falls diese durch Wahl geeigneter Reaktionspartner und Reaktionsbedingungen angestrebt wird.

## Patentansprüche

1. Verfahren zur Herstellung von Polyurethanformkörpern mit gegebenenfalls zellförmigem Kern, insbesondere nach dem RIN-Verfahren, durch Umsetzung von mindestens einem Polyol mit einem organischen Di- oder Polyisocyanat in Gegenwart von Katalysatoren, Trennmitteln und gegebenenfalls üblichen Zusatzmitteln, wie Vernetzern, Treibmitteln, Stabilisatoren, Zellregulatoren, Pigmenten und Füllstoffen, dadurch gekennzeichnet, daß man als Trennmittel Verbindungen der allgemeinen Formel

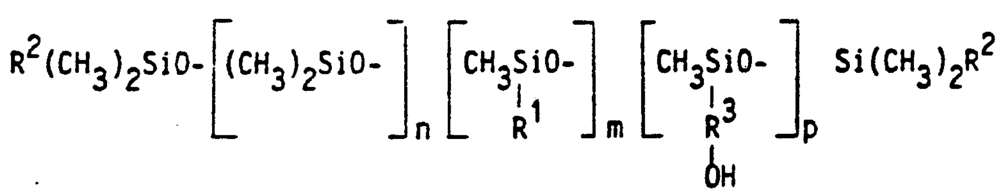

$R^1$ Alkylgruppe mit 16 bis 40 Kohlenstoffatomen,
$R^2 = R^1$ oder Methylgruppe,
$R^3$ = zweiwertige aliphatische Kohlenwasserstoffgruppe, deren Kohlenstoffkette durch ein oder mehrere Sauerstoffatome unterbrochen sein kann,
$n = 0$ bis 50,
$m = 2$ bis 100, wobei $m > n$ ist,
$p = 0$ bis 5,
mit der Maßgabe, daß das Siloxan einen Schmelzpunkt $\geq 30°C$ aufweist, jedoch bei der Temperatur, die die Formwandung bei dem Verfahren annimmt, schmilzt,
in feinverteilter Form mit einer durchschnittlichen Teilchengröße von $\geq 5$ bis 100 µm in Mengen von 0,5 bis 5 Gew.-%, bezogen auf Reaktionsansatz, verwendet.

2. Verfahren nach Anspruch 1, dadurch gekennzeichnet, daß man Verbindungen, deren Gruppen $R^1$, $R^2$, $R^3$, und Indices n, m und p einzeln oder in Kombination folgende bevorzugte Bedeutung haben:
$R^1$ Alkylgruppe mit 20 bis 30 Kohlenstoffatomen,
$R^2$ = Methylgruppe,
$R^3 = (CH_2)_p$-, wobei $p = 3$ bis 12 ist, oder $-(C_2H_4O-)_x(C_3H_6O)_y$, wobei $x = 0$ bis 10, $y = 0$ bis 10, $x + y \geq 1$ ist,
$n = 0$ bis 10,
$m = 5$ bis 80,
$p = 1$ oder 2,
verwendet.

3. Verfahren nach Anspruch 1 oder 2, dadurch gekennzeichnet, daß man die Trennmittel in Form einer 10 bis 30 Gew.-%-igen Suspension, deren äußere Phase durch einen Teil des zur Verschäumung eingesetzten Polyols gebildet wird, verwendet.

## Claims

1. Process for producing polyurethane mouldings optionally with a cellular core, especially by the RIM process, by reacting at least one polyol with an organic diisocyanate or polyisocyanate in the presence of catalysts, release agents and optionally conventional additives such as crosslinking agents, blowing agents, stabilisers, cell regulators, pigments and fillers, characterized in that compounds of the general formula

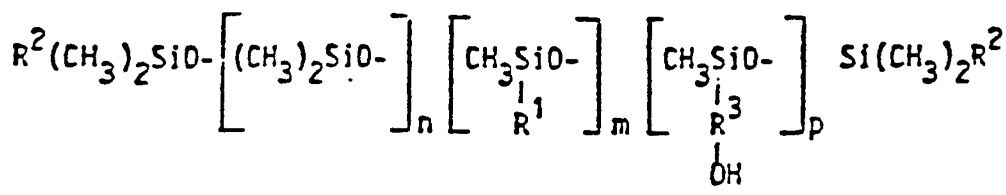

where
$R^1$ an alkyl group having 16 to 40 carbon atoms,
$R^2 = R^1$ or a methyl group,
$R^3$ divalent aliphatic hydrocarbon grouphe carbon chain of which can be interrupted by one or more oxygen atoms,
$n = 0$ to 50
$m = 2$ to 100 with $m > n$, and
$p = 0$ to 5,
with the proviso that the siloxane has a melting point of $\geqslant 30°C$ but melts at the temperature assumed by the mould all during the process,
in a finely divided fo rm of an average particle size of $\geqslant 5$ to 100 µm are used as the release agent in quantities of 0.5 to 5 % by weight, relative to the reaction batch.

2. Process according to Claim 1, characterized in that compounds are used of which the groups $R^1$, $R^2$ and $R^3$ and the indices n, m and p have the folloving preferred meanings:
$R^1$ = an alkyl group having 20 to 30 carbon atoms,
$R^2$ = a methyl group,
$R^3 = -(CH_2)p$, with $p = 3$ to 12 or $-(C_2H_4O-)_x(C_3H_6O)_y$, with $x = 0$ to 10, $y = 0$ to 10 and $x + y \geqslant 1$,
$m = 0$ to 10,
$m = 5$ to 80 and
$p = 1$ or 2.

3. Process according to Claim 1 or 2, characterized in that the release agents are used in the form of a 10 to 30 % by weight suspension, the external phase of which is formed by part of the polyol employed for foaming.

## Revendications

1. Procédé pour la préparation d'objets moulés en polyuréthanne, avec un noyau éventuellement alvéolaire, en particulier par le procédé RIM, par réaction d'au moins un polyol sur un di- ou polyisocyanate organique en présence de catalyseurs, d'agents de démoulage et éventuellement d'additifs habituels, comme des agents de réticulation, des agents gonflants, des stabilisants, des régulateurs d'alvéoles, des pigments et des charges, caractérisé en ce qu'on utilise comme agents de démoulage des composés de formule générale

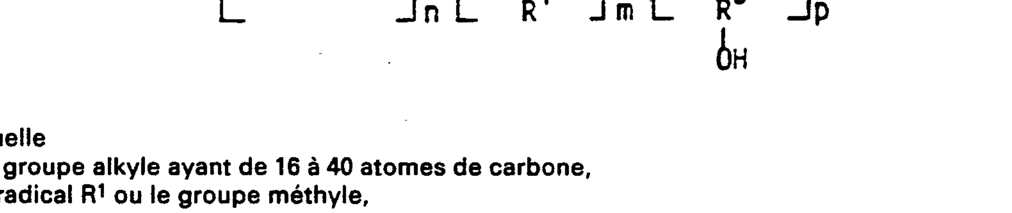

dans laquelle
$R^1$ est un groupe alkyle ayant de 16 à 40 atomes de carbone,
$R^2$ est le radical $R^1$ ou le groupe méthyle,

$R^3$ est un groupe hydrocarboné aliphatique divalent dont la chaîne carbonée peut être interrompue par un ou plusieurs atomes d'oxygène,

n vaut de 0 à 50,

m vaut de 2 à 100, avec $m > n$,

p vaut de 0 à 5,

à la condition que le siloxane ait un point de fusion ⩾ 30°C, mais qu'il fonde à la température que prend la paroi du moule dans le procédé,

sous une forme finement divisée ayant une granulométrie moyenne comprise entre ⩾ 5 et 100 µm, en des quantités de 0,5 à 5 % en poids par rapport à la masse réactionnelle.

2. Procédé selon la revendication 1, caractérisé en ce qu on utilise des composés dont les groupes $R^1$, $R^2$, $R^3$ et les indices n, m et p, seuls ou en combinaison, ont les significa tions préférées suivantes:

$R^1$ est un groupe alkyle ayant de 20 à 30 atomes de carbone,

$R^2$ est le groupe méthyle,

$R^3$ est $-(CH_2)_p-$, où $p = 3$ à 12, ou $-(C_2H_4O)_x(C_3H_6O)_y$, où $x = 0$ à 10, $y = 0$ à 10, $x + y \geqslant 1$,

n vaut de 0 à 10,

m vaut de 5 à 80

p vaut 1 ou 2.

3. Procédé selon la revendication 1 ou 2, caractérisé en ce qu'on utilise les agents de démoulage sous la forme d'une suspension à 10 à 30 % en poids dont la phase extérieure est formée par une partie du polyol utilisé pour le moussage.